(19) Europäisches Patentamt
European Patent Office
Office européen des brevets

(11) EP 0 377 305 B1

(12) EUROPEAN PATENT SPECIFICATION

(45) Date of publication and mention of the grant of the patent:
**07.06.2000 Bulletin 2000/23**

(51) Int. Cl.$^7$: **C10M 105/06**, C10G 69/12, C07C 2/64, C07C 15/20

(21) Application number: **89313382.7**

(22) Date of filing: **20.12.1989**

(54) **Novel alkylaromatic lubricant fluids**

Alkylaromatische Schmieröle

Lubrifiants alkylaromatiques

(84) Designated Contracting States:
**AT BE DE ES FR GB IT NL SE**

(30) Priority: **06.01.1989 US 293911**
**21.02.1989 US 312277**

(43) Date of publication of application:
**11.07.1990 Bulletin 1990/28**

(73) Proprietor:
**MOBIL OIL CORPORATION**
**New York New York 10017 (US)**

(72) Inventors:
- **Forbus, Thomas Reginald**
  **Newtown Pennsylvania 18940 (US)**
- **Ho, Suzzy Chen Hsi**
  **Plainsboro New Jersey 08536 (US)**
- **Pelrine, Bruce Patrick**
  **Trenton New Jersey 08638 (US)**
- **Wu, Margaret May-Som**
  **Belle Mead New Jersey 08502 (US)**

(74) Representative:
**Jones, Helen Marjorie Meredith**
**Gill Jennings & Every,**
**Broadgate House,**
**7 Eldon Street**
**London EC2M 7LH (GB)**

(56) References cited:
**FR-A- 2 318 220** **GB-A- 2 078 776**
**US-A- 3 449 459** **US-A- 4 211 665**
**US-A- 4 714 794** **US-A- 4 827 073**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.7 (HRS)/3.6

## Description

This invention relates to novel alkylated aromatic compositions useful as lubricant basestock and lubricant additives and to their method of preparation. More particularly, the invention relates to novel lubricant compositions having high viscosity index (VI) and increased thermal stability prepared by alkylating aromatics with olefinic polyalpha-olefin oligomers that exhibit high VI and low pour point. This invention also relates to novel lubricant compositions having high viscosity index (VI) and increased oxidative stability prepared by alkylating aromatics with mono-olefinic dimer prepared by polyalpha-olefin oligomerization using reduced chromium oxide catalysts on solid support.

Efforts to improve the performance of natural mineral oil based lubricants by the synthesis of oligomeric hydrocarbon fluids have been the subject of important research and development in the petroleum industry for at least fifty years and have led to the relatively recent market introduction of a number of superior polyalpha-olefin (PAO) synthetic lubricants, primarily based on the oligomerization of alpha-olefins or 1-alkenes. In terms of lubricant property improvement, the thrust of the industrial research effort on synthetic lubricants has been toward fluids exhibiting useful viscosities over a wide range of temperature, i.e.,improved viscosity index, while also showing lubricity, thermal and oxidative stability and pour point equal to or better than mineral oil. These new synthetic lubricants lower friction and hence increase mechanical efficiency across the full spectrum of mechanical loads from worm gears to traction drives and do so over a wider range of operating conditions than mineral oil lubricants.

Notwithstanding their generally superior properties, PAO lubricants are often formulated with additives to enhance those properties for specific applications.

The more commonly used additives include oxidation inhibitors, rust inhibitors, metal passivators, antiwear agents, extreme pressure additives, pour point depressants, detergent-dispersants, viscosity index (VI) improvers, foam inhibitors and the like. This aspect of the lubricant arts is specifically described in Kirk-Othmer "Encyclopedia of Chemical Technology", 3rd edition, Vol. 14, pp. 477-526, Improvements in lubricant technology pursued by artisans in the field flow from both new additive development addressed to deficiencies in lubricant oligomers and new oligomer development for inherently better properties. Alkylated aromatics, particularly alkylated naphthalene, are known in the prior art as lubricant additives for their antiwear properties, thermal and oxidative stability as disclosed in U.S. Patents 4,211,665, 4,238,343, 4,604,491 and 4,714,7944. U.K. Patent GB-A-2 078 776 discloses a method for producing a fluid for use as a lubricating oil which has high kinematic viscosity, high viscosity index and low pour point by polymerizing an n-olefin containing 8 to 24 carbon atoms in the presence of hydrogen fluoride catalyst to give an oligomer containing 24 to 48 carbon atoms and reacting the oligomer with benzene or a lower alkylbenzene in the presence of a Lewis acid catalyst, thereby obtaining an alkylbenzene having a molecular weight of 414 to 750. Antiwear properties of alkylnaphthalene lubricating fluids are presented in Khimiya i Tekhnologiya Topliv i Masel, No. 8, pp. 28-29, August, 1986 and show promise as base stocks for lubricants.

Recently, novel lubricant compositions (referred to herein as HVI-PAO) comprising polyalpha-olefins and methods for their preparation employing as catalyst reduced chromium on a silica support have been disclosed in U.S. Patents 4,827,064 and 4,827,073. The process comprises contacting $C_6$-$C_{20}$ 1-alkene feedstock with reduced valence state chromium oxide catalyst on porous silica support under oligomerizing conditions in an oligomerization zone whereby high viscosity, high VI liquid hydrocarbon lubricant is produced having branch ratios less than 0.19 and pour point below -15°C. Lubricants produced by the process cover the full range of lubricant viscosities and exhibit a remarkably high VI and low pour point even at high viscosity. The as-synthesized HVI-PAO oligomer has olefinic unsaturation associated with the last of the recurring monomer units in the structure.

In the preparation of the novel HVI-PAO lubricant, alpha-olefin dimer containing olefinic unsaturation can be separated from the oligomerization reaction. The composition of the dimer mixture conforms to the unique specificity of the oligomerization reaction in that little double bond isomerization is found. Separation of the dimer, representing non-lube range molecular weight material, is necessitated to control product volatility and viscosity. However, as oligomerization conditions are changed to produce the lower viscosity products of lower average molecular weight important to the marketplace, the non-lube range dimer fraction by-product yield increases in proportion to that lowering in average molecular weight of the oligomerization product. In the synthesis of low average molecular weight oligomers substantial amounts of products stop at the dimer stage. Once so formed, they are inert to the further incorporation of olefin in the HVI-PAO oligomerization reaction. The increase in dimer by-product yield represents a substantial economic burden on the overall process to produce useful lower viscosity lubricant in the HVI-PAO process.

It has been found that aromatic compounds can be alkylated with olefinic HVI-PAO oligomers or mono-olefinic HVI-PAO dimer in contact with an acidic catalyst to produce novel alkylated aromatic hydrocarbon compositions. Unexpectedly, the novel HVI-PAO alkylated aromatic hydrocarbons retain the unique structurally related features of the alkylating HVI-PAO olefinic oligomer and thereby exhibit an extraordinary combination of properties relating to high viscosity index and low pour point which makes them very useful as lubricant base stock. Further, it has been found that the HVI-PAO alkyl aromatic compositions show improved thermal stability. The HVI-PAO alkylated aromatics can be prepared by using very low to very high viscosity HVI-PAO as alkylating agent for benzene-type or naphthalene-type

aromatics. Depending upon the HVI-PAO molecular weight range and the substituent groups on the aromatic nucleus, useful lubricant additives can be prepared for improved antiwear properties, antioxidant and other properties.

More particularly, novel alkylated aromatic hydrocarbons have been discovered having the structure defined in claim 1.

The novel alkylated aromatic hydrocarbons of the instant invention can be prepared by Friedel-Crafts reaction by contacting the HVI-PAO olefin and aromatic compound with acidic catalyst such as Lewis acids. Aluminum chloride or zeolite catalysts are suitable. The HVI-PAO alkylaromatic hydrocarbon has a significantly reduced degree of unsaturation. Accordingly, hydrogenation of the product to provide stable lube base stock can be eliminated for high viscosity materials.

In the drawings, Figure 1 is a comparison of PAO and HVI-PAO syntheses.

Figure 2 shows a comparison of VI for PAO and HVI-PAO.

Figure 3 illustrates the possible dimer structures from the oligomerization of 1-decene according to the HVI-PAO process.

In the present invention aromatic hydrocarbons, including substituted hydrocarbons, are alkylated with unique olefin oligomers produced from the oligomerization of 1-alkenes in contact with reduced chromium oxide on silica support. As oligomerized, these HVI-PAO oligomers are mixtures of dialkyl vinylidenic and 1,2 dialkyl or trialkyl mono-olefin oligomers.

In another embodiment of the present invention, synthetic hydrocarbon lubricants are prepared by alkylation of aromatics using unique mono-olefin dimers produced as a by-product in the HVI-PAO oligomerization reaction as alkylating agent. The alkylate produced as synthetic hydrocarbon lubricant has a typically low viscosity and high viscosity index. When alpha-olefin, such as 1-decene, is oligomerized in the HVI-PAO process products with very high viscosity indices and low pour points are obtained. Retention of the low pour point properties of these oligomers upon hydrogenation, a necessary process to impart good oxidative stability to the products, requires removal of the dimers to very low levels. In the synthesis of low viscosity fluids by the HVI-PAO process a substantial amount of the 1-decene is dimer. This limits the yield of lube range product and gives a substantial amount of by-product. The dimers are separated from the oligomerization reaction product typically by distillation inorder to meet lube specifications such as volatility, viscosity and pour point.

Referring to Figure 1, the synthesis of the olefinic oligomers (HVI-PAO) used as starting material for the present invention is compared with that of conventional polyalphaolefins (PAO) prepared from 1-decene. Polymerization with the novel reduced chromium catalyst described hereinafter leads to an oligomer substantially free of double bond isomerization. Conventional PAO, on the other hand, promoted by $BF_3$ or $AlCl_3$ forms a carbonium ion which,in turn, promotes isomerization of the olefinic bond and the formation of multiple isomers. The HVI-PAO produced in the present invention has a structure with a $CH_3/CH_2$ ratio <0.19 compared to a ratio of >0.20 for PAO.

Figure 2 compares the viscosity index versus viscosity relationship for HVI-PAO and PAO lubricants, showing that HVI-PAO is distinctly superior to PAO at all viscosities tested. Remarkably, despite the more regular structure of the HVI-PAO oligomers as shown by branch ratio that results in improved viscosity index (VI), they show pour points superior to PAO. Conceivably, oligomers of regular structure containing fewer isomers would be expected to have higher solidification temperatures and higher pour points, reducing their utility as lubricants. But, surprisingly, such is not the case for HVI-PAO used as stating olefin in the alkylation reaction of the present invention.

It has been found that the process described herein to produce HVI-PAO oligomers can be controlled to yield oligomers having weight average molecular weight between 280 and 450,000 and number average molecular weight between 280 and 180,000. Measured in carbon numbers, molecular weights range from $C_{20}$ to $C_{1300}$ and viscosity up to 7500 $mm^2/s$ at 100°C, with a preferred range of $C_{30}$ to $C_{1300}$ and a viscosity of up to 1000 $mm^2/s$ at 100°C for lube base stock material. Molecular weight distributions (MWD), defined as the ratio of weight average molecular to number average molecular weight, range from 1.00 to 5, with a preferred range of 1.01 to 3 and a more preferred MWD of 1.05 to 2.5. Viscosities of the olefinic HVI-PAO oligomers used as alkylating agent measured at 100°C range from 1.5 $mm^2/s$ to 7500 $mm^2/s$.

In general, the HVI-PAO oligomers have the following regular head-to-tail structure where n is preferably 0 to 17, terminating in olefinic unsaturation:

$$-(CH_2\text{-}CH)_x-$$

$$(CH_2)_n$$

$$CH_3,$$

with some head-to-head connections. The as-synthesized HVI-PAO molecular structure generally has one double bond unsaturation. The HVI-PAO process produces a surprisingly simpler and useful dimer compared to the dimer produced by 1-alkene oligomerization with $BF_3$ or $AlCl_3$ as commercially practiced. Typically, in the present invention it has been found that a significant proportion of unhydrogenated dimerized 1-alkene has a vinylidenyl structure as follows:

$$CH_2=CR_1R_2$$

where $R_1$ and $R_2$ are alkyl groups representing the residue from the head-to-tail addition of 1-alkene molecules. For example, 1-decene HVI-PAO dimer, which can be used as the alkylating olefin in the present invention, has been found to contain only three major components, as determined by GC (gas chromatography). Based on $C^{13}$ NMR analysis, the unhydrogenated components were found to be 8-eicosene, 9-eicosene, 2-octyldodecene and 9-methyl-8 or 9-methyl-9-nonadecene.

Olefins suitable for use as starting material in the preparation of olefinic HVI-PAO oligomers include those olefins containing from 2 to 20 carbon atoms such as ethylene, propylene, 1-butene, 1-pentene, 1-hexene, 1-octene, 1-decene, 1-dodecene and 1-tetradecene and branched chain isomers such as 4-methyl-1-pentene. Also suitable for use are olefin-containing refinery feedstocks or effluents. However, the olefins used in this invention are preferably alpha olefinic as for example 1-hexene to 1-hexadecene and more preferably 1-octene to 1-tetradecene, or mixtures of such olefins.

HVI-PAO oligomers of alpha-olefins used in this invention have a low branch ratio of less than 0.19 and superior lubricating properties compared to the alpha-olefin oligomers with a high branch ratio, as produced in known commercial methods.

In the preparation of HVI-PAO dimers, olefins suitable for use as starting material in the preparation of olefinic HVI-PAO oligomers and the by-product dimer used as starting material in the present invention include those olefins containing from 6 to 20 carbon atoms such as 1-hexene, 1-octene, 1-decene, 1-dodecene and 1-tetradecene and branched chain isomers such as 4-methyl-1-pentene. A preferred 1-alkene is 1-decene. Also suitable for use are olefin-containing refinery feedstocks or effluents.

Unsaturated HVI-PAO alpha-olefin oligomers are prepared by oligomerization reactions in which a major proportion of the double bonds of the alpha-olefins are not isomerized. These reactions include alpha-olefin oligomerization by supported metal oxide catalysts, such as Cr compounds on silica or other supported IUPAC Periodic Table Group VIB compounds. The catalyst most preferred is a lower valence Group VIB metal oxide on an inert support. Preferred supports include silica, alumina, titania, silica alumina, magnesia aluminum phosphate and the like. The support material binds the metal oxide catalyst. Those porous substrates having a pore opening of at least 40 x $10^{-7}$mm (40 angstroms) are preferred.

The dimers that are obtainable from 1-decene oligomerization, for example, by the HVI-PAO process are four general structural isomers in which two internal olefin products have a pair of double bond positional isomers plus cis/trans configurations. This gives ten possible dimer structures from 1-decene which are shown in Figure 1. From analysis of the product mixture of hydrogenated dimer, structures 1, 2 and 3, shown in Figure 1, are the major dimer products produced from 1-decene oligomerization with the HVI-PAO process.

The support material usually has high surface area and large pore volumes with an average pore size of 40 x $10^{-7}$ to 350 x $10^{-7}$mm. The high surface area is beneficial for supporting large amount of highly dispersive, active chromium metal centers and to give maximum efficiency of metal usage, resulting in very high activity catalyst. The support should have large average pore openings of at least 40 x $10^{-7}$ mm (40 angstroms), with an average pore opening of >60 x $10^{-7}$ to 300 x $10^{-7}$mm being preferred. This large pore opening will not impose any diffusional restriction of the reactant and product to and away from the active catalytic metal centers, thus further optimizing the catalyst productivity. Also, for this catalyst to be used in a fixed bed or slurry reactor and to be recycled and regenerated many times, a silica support with good physical strength is preferred to prevent catalyst particle attrition or disintegration during handling or reaction.

The supported metal oxide catalysts are preferably prepared by impregnating metal salts in water or organic solvents onto the support. Any suitable organic solvent known to the art may be used, for example, ethanol,methanol, or acetic acid. The solid catalyst precursor is then dried and calcined at 200 to 900°C by air or other oxygen-containing gas. Thereafter the catalyst is reduced by any of several various and well known reducing agents such as, for example, CO, $H_2$, $NH_3$, $H_2S$, $CS_2$, $CH_3SCH_3$, $CH_3SSCH_3$,metal alkyl containing compounds such as $R_3Al$, $R_3B$,$R_2Mg$, RLi, $R_2Zn$, where R is alkyl, alkoxy, aryl and the like. Preferred are CO or $H_2$ or metal alkyl containing compounds.

Alternatively, the Group VIB metal may be applied to the substrate in reduced form, such as CrII compounds. The resultant catalyst is very active for oligomerizing olefins at a temperature range from below room temperature to 250°C at a pressure of 10 kPa (0.1 atmosphere) to 34500 kPa (5000 psi). Contact time of both the olefin and the catalyst can vary from one second to 24 hours. The catalyst can be used in a batch type reactor or in a fixed bed, continuous-flow reactor.

In general the support material may be added to a solution of the metal compounds, e.g., acetates or nitrates, etc., and the mixture is then mixed and dried at room temperature. The dry solid gel is purged at successively higher temperatures to 600°C for a period of 16 to 20 hours. Thereafter the catalyst is cooled in an inert atmosphere to a temperature of 250 to 450°C and a stream of pure reducing agent is contacted therewith for a period when sufficient reducing agent, such as CO, has passed through to reduce the catalyst as indicated by a distinct color change from bright orange to pale blue. Typically, the catalyst is treated with an amount of CO equivalent to a two-fold stoichiometric excess to reduce the catalyst to a lower valence CrII state. Finally the catalyst is cooled to room temperature and is ready for use.

The product oligomers have a very wide range of viscosities with high viscosity indices suitable for high performance lubrication use. The product oligomers also have atactic molecular structure of mostly uniform head-to-tail connections with some head-to-head type connections in the structure. These low branch ratio oligomers have high viscosity indices at least 15 to 20 units and typically 30-40 units higher than equivalent viscosity prior art oligomers, which regularly have higher branch ratios and correspondingly lower viscosity indices. These low branch oligomers maintain better or comparable pour points.

The branch ratios defined as the ratios of $CH_3$ groups to $CH_2$ groups in the lube oil are calculated from the weight fractions of methyl groups obtained by infrared methods, published in Analytical Chemistry, Vol. 25, No. 10, p. 1466 (1953).

$$\text{Branch ratio} = \frac{\text{wt fraction of methyl group}}{\text{1-(wt fraction of methyl group)}}$$

The following examples of the preparation of HVI-PAO olefin used as starting material in the present invention are presented merely for illustration purposes and are not intended to limit the scope of the present invention.

Example 1

Catalyst Preparation and Activation Procedure

1.9 grams of chromium (II) acetate ($Cr_2(OCOCH_3)_4 2H_2O$)(5.58 mmole) (commercially obtained) is dissolved in 50 ml of hot acetic acid. Then 50 grams of a silica gel of 8-12 mesh size, a surface area of 300 $m^2$/g, and a pore volume of 1 ml/g, also is added. Most of the solution is absorbed by the silica gel. The final mixture is mixed for half an hour on a rotavap at room temperature and dried in an open-dish at room temperature. First, the dry solid (20 g) is purged with $N_2$ at 250°C in a tube furnace. The furnace temperature is then raised to 400°C for 2 hours. The temperature is then set at 600°C with dry air purging for 16 hours. At this time the catalyst is cooled under $N_2$ to a temperature of 300°C. Then a stream of pure CO (99.99% from Matheson) is introduced for one hour. Finally, the catalyst is cooled to room temperature under $N_2$ and ready for use.

Example 2

The catalyst prepared in Example 1 (3.2g) is packed in a 9.5 mm (3/8") stainless steel tubular reactor inside an $N_2$ blanketed dry box. The reactor under $N_2$ atmosphere is then heated to 150°C by a single-zone Lindberg furnace. Pre-purified 1-hexene is pumped into the reactor at 965 kPa (140 psi) and 20 ml/hr. The liquid effluent is collected and stripped of the unreacted starting material and low boiling material at 7 kPa (0.05 mm Hg). The residual clear, colorless liquid has viscosities and VI's suitable as a lubricant base stock.

| Sample | Prerun | 1 | 2 | 3 |
|---|---|---|---|---|
| T.O.S.(time on stream), hr. | 2 | 3.5 | 5.5 | 21.5 |
| Lube Yield, wt% | 10 | 41 | 74 | 31 |
| Viscosity, $mm^2$/s, at | | | | |
| 40°C | 208.5 | 123.3 | 104.4 | 166.2 |
| 100°C | 26.1 | 17.1 | 14.5 | 20.4 |
| VI | 159 | 151 | 142 | 143 |

Example 3

Similar to Example 2, a fresh catalyst sample is charged into the reactor and 1-hexene is pumped to the reactor at 101 kPa (1 atm) and 10 ml per hour. As shown below, a lube of high viscosities and high VI's is obtained. These runs show that at different reaction conditions, a lube product of high viscosities can be obtained.

| Sample | A | B |
|---|---|---|
| T.O.S., hrs. | 20 | 44 |
| Temp.,°C | 100 | 50 |
| Lube Yield, % | 8.2 | 8.0 |
| Viscosities, $mm^2/s$ at | | |
| 40°C | 13170 | 19011 |
| 100°C | 620 | 1048 |
| VI | 217 | 263 |

Example 4

A commercial chrome/silica catalyst which contains 1% Cr on a large-pore volume synthetic silica gel is used. The catalyst is first calcined with air at 800°C for 16 hours and reduced with CO at 300°C for 1.5 hours. Then 3.5 g of the catalyst is packed into a tubular reactor and heated to 100°C under a nitrogen atmosphere. 1-Hexene is pumped through at 28 ml per hour at 101 kPa (1 atmosphere). The products are collected and analyzed as follows:

| Sample | C | D | E | F |
|---|---|---|---|---|
| T.O.S., hrs. | 3.5 | 4.5 | 6.5 | 22.5 |
| Lube Yield, % | 73 | 64 | 59 | 21 |
| Viscosity, $mm^2/s$, at | | | | |
| 40°C | 2548 | 2429 | 3315 | 9031 |
| 100°C | 102 | 151 | 197 | 437 |
| VI | 108 | 164 | 174 | 199 |

These runs show that different Cr on a silica catalyst are also effective for oligomerizing olefins to lube products.

Example 5

A commercial Cr on silica catalyst which contains 1% Cr on a large pore volume synthetic silica gel is used. The catalyst is first calcined with air at 700°C for 16 hours and reduced with CO at 350°C for one to two hours. 1.0 part by weight of the activated catalyst is added to 1-decene of 200 parts by weight in a suitable reactor and heated to 185°C. 1-Decene is continuously fed to the reactor at 2-3.5 parts/minute and 0.5 parts by weight of catalyst is added for every 100 parts of 1-decene feed. After 1200 parts of 1-decene and 6 parts of catalyst are charged, the slurry is stirred for 8 hours. The catalyst is filtered and the light product boiling below 150°C @ 10 kPa (0.1mm Hg) is stripped. The residual product is hydrogenated with a Ni on Kieselguhr catalyst at 200°C. The finished product has a viscosity at 100°C of 18.5 $mm^2/s$, VI of 165 and pour point of -55°C.

Example 6

Example 5 is repeated, except the reaction temperature is 125°C. The finished product has a viscosity at 100°C of 145 $mm^2/s$, VI of 214, pour point of -40°C.

Example 7

Example 5 is repeated, except the reaction temperature is 100°C. The finished product has a viscosity at 100°C of 298 $mm^2/s$, VI of 246 and pour point of -32°C.

The following table summarizes the molecular weights and distributions of Examples 5 to 7.

| Examples | 5 | 6 | 7 |
|---|---|---|---|
| V @100°C, $mm^2/s$ | 18.5 | 145 | 298 |
| VI | 165 | 214 | 246 |
| number-averaged molecular weights, $MW_n$ | 1670 | 2062 | 5990 |
| weight-averaged molecular weights, $MW_w$ | 2420 | 4411 | 13290 |
| molecular weight distribution, MWD | 1.45 | 2.14 | 2.22 |

Under similar conditions, HVI-PAO product with viscosity as low as 1.5$mm^2/s$ and as high as 7500 $mm^2/s$, with VI between 130 and >350, can be produced.

The HVI-PAO alkylaromatic derivatives of the present invention are prepared in a Friedel-Crafts acid catalyzed alkylation synthesis. Acids which may be used as catalyst include Lewis acids such as, but not limited to, $BF_3$, $AlCl_3$, HCl, HF, HBr, $H_2SO_4$, $H_3PO_4$, $P_2O_5$, $SO_3$, $SnCl_4$, $FeCl_3$, $ZnCl_2$, $TiCl_4$, $SbCl_5$, acidic zeolites or acidic clay catalysts or amorphous aluminosilicates, particularly zeolite such as H-ZSM-5 and organic acids such as $R\text{-}SO_3H$ where R is a polymeric resin such as sulfonated polystyrene. Preferred catalysts are $AlCl_3$, $BF_3$, acidic zeolites such as Zeolite Beta, Zeolite Y, ZSM-5, ZSM-35 and Amberlyst 15, obtainable from Rohm & Haas.

Aromatic compounds which may be used in the present invention include substituted and unsubstituted benzene and polynuclear aromatic compounds, particularly naphthalene, anthracene and phenanthracene. Examples of useful aromatic hydrocarbons for the present invention include benzene, toluene, o,m,p-xylene, hemimellitene, pseudocumene, ethylbenzene, n-propylbenzene, cumene, n-butylbenzene, isobutylbenzene, sec-butylbenzene, tert-butylbenzene, p-cymene, biphenyl, diphenylmethane, triphenyl methane, 1,2-diphenylethane and similarly alkyl substituted naphthalenes and anthracenes; also phenol, catechol, acylphenol such as acetylphenol, carbonate esters such as phenyl methyl or ethyl carbonate and diphenyl carbonate, alkylphenol such as anisole, chloro and bromobenzene, aniline, acyl aniline such as acetanilide, methyl and ethylbenzoate, thiophenol and acylated thiophenol, nitrobenzene, diphenylether, diphenylsulfide and similarly substituted naphthalenes and anthracenes, in particular naphthols such as mono and dihydroxy naphthalene.

The alkylaromatic hydrocarbon composition of the present invention have the following structure:

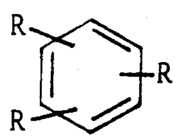 , 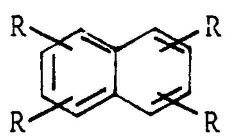 ,

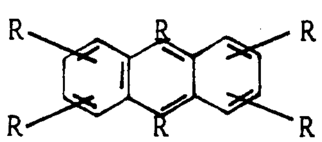 and 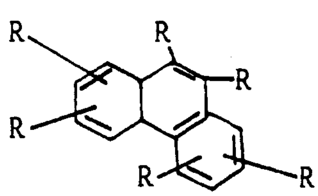

where at least one R group is the hydrocarbyl HVI-PAO residue of the polymerization of $C_2$-$C_{20}$ 1-alkene, the residue having a branch ratio less than 0.19, weight average molecular weight between 300 and 45,000, number average molecular weight between 300 and 18,000, molecular weight distribution between 1 and 5; and wherein the remaining R groups are selected from hydrogen, $C_1$-$C_{20}$ cyclic or acyclic alkyl and alkenyl, aryl, $NH_2$, acylamido, halogen, acyl, $NO_2$, YO and YS where Y is hydrogen, acyl, alkoxycarbonyl, phenyl or $C_1$-$C_{20}$ cyclic or acyclic alkyl and alkenyl. In one embodiment, the alkyl group comprises the hydrocarbyl moiety of the olefinic dimer of $C_6$-$C_{20}$ 1-alkene, wherein the dimer comprises a product or by-product of the oligomerization of $C_6$-$C_{20}$ 1-alkene, under oligomerization conditions in contact with supported reduced metal oxide catalyst, the metal oxide catalyst comprising a lower valence state form of at least Group VIB metal; and wherein the remaining R groups are selected from hydrogen, $C_1$-$C_{20}$ cyclic or acyclic alkyl and alkenyl, aryl, $NH_2$, acylamido, halogen, acyl, $NO_2$, YO and YS where Y is hydrogen, acyl, alkoxycarbonyl, phenyl and $C_1$-$C_{20}$ cyclic or acyclic alkyl and alkenyl.

Generally, the hydrocarbyl HVI-PAO residue referred to above comprises a vinylidenyl radical having the structure:

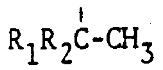

or

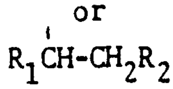

where $R_1$ and $R_2$ may be alike or different and comprise the HVI-PAO oligomeric moiety having a generally head-to-tail repeating structure of $C_2$-$C_{20}$ 1-alkenes with a $CH_3/CH_2$ ratio less than 0.20, preferably between 0.14 and 0.19. The hydrocarbyl HVI-PAO residue may contain between 20-1300 carbon atoms; preferably between 30-1000 carbon atoms.

In the following examples the preparation of the novel HVI-PAO alkylaromatics of the present invention is described and their properties compared to the HVI-PAO olefin used as alkylating agent.

<u>Example 8</u>

To a slurry of 7.3g of aluminum chloride in 200ml of toluene at room temperature is slowly added 102g of the HVI-PAO polyalpha-olefin with a viscosity of 18mm$^2$/s measured at 100°C. The addition is at a rate so as to keep the temperature below 30°C. The mixture is stirred for 12 hours and then quenched with water, washed with dilute HCl and dried over $MgSO_4$. Volatile material is removed by vacuum distillation at 120°C and 10 kPa (0.1mm) to recover the alkylation product (product 1). Using the same procedure and HVI-PAO olefin as starting material, anisole and naphthalene are alkylated, with the results presented below for products 2-3.

<u>Example 9</u>

In this Example, the reactions (4-7) are carried out in a similar manner as in Example 1 except a HVI-PAO polyalpha-olefin of 145.2mm$^2$/s measured at 100°C is used as the starting material and toluene, pseudocumene, anisole and naphthalene are alkylated.

In the following Table I the results of Examples 8 and 9 are presented. The results demonstrate that the alkylated products have very low unsaturations, as indicated by bromine number, and retain the high viscosity and pour points of the starting HVI-PAO olefin. Accordingly, the unique structure of the HVI-PAO moiety responsible for high VI and low pour point survives the alkylation reaction.

TABLE I

| Product | Aromatic Group | Wt % | Bromine number | Lubricant mm$^2$/s | Properties VI Pour Pt | |
|---|---|---|---|---|---|---|
| HVI-PAO control | none | 0.0 | 11.3 | 18.2 | 164 | <-52°C |
| 1 | toluene | 5.5 | 1.1 | 26.0 | 147 | <-42°C |
| 2 | anisole | 6.5 | 0.7 | 28.0 | 148 | <-43°C |

TABLE I (continued)

| Product | Aromatic Group | Wt % | Bromine number | Lubricant $mm^2/s$ | Properties VI Pour Pt | |
|---|---|---|---|---|---|---|
| 3 | naphthalene | 7.5 | 1.6 | 39.0 | 139 | -36°C |
| HVI-PAO control | none | 0.0 | 3.0 | 145.2 | 212 | -37°C |
| 4 | toluene | 1.2 | 2.4 | 140.7 | 210 | -40°C |
| 5 | pseudocumene | 1.8 | 0.6 | 166.3 | 205 | -24°C |
| 6 | anisole | 1.6 | 0.6 | 156.7 | 210 | -40°C |
| 7 | naphthalene | 1.9 | 0.6 | 217.0 | 213 | -31°C |

The low unsaturation of the alkylaromatics of the present invention, as evidenced by their low bromine number, eliminates the conventional hydrofinishing step usually required for lubricant basestock and, thereby, providing an additional advantage by improving the overall economics of the process of the instant invention using HVI-PAO olefins as the alkylating agent in the alkylation of aromatics.

Surprisingly, the products of the present invention demonstrate higher thermally stability compared to HVI-PAO. The thermal stability of alkylation products (Example 9, products 4-7 from 145.2$mm^2/s$ HVI-PAO) were examined by measuring the loss of viscosity (V @ 100°C) after heating at 280°C for 24 hours under an inert atmosphere. The results are shown in Table II. These data demonstrate that addition of aromatic functional groups to HVI-PAO olefins reduces the viscosity loss and give a lubricant basestock with better thermal stability.

TABLE II

| Product | Aromatic Group | Viscosity Loss % |
|---|---|---|
| HVI-PAO | none | 68 |
| 4 | toluene | 63 |
| 5 | pseudocumene | 46 |
| 6 | anisole | 16 |
| 7 | naphthalene | 31 |

The following Examples illustrate the process and product properties of the present invention involving the alkylation of phenol with olefinic HVI-PAO oligomer.

Example 10

A mixture of 101g of HVI-PAO oligomer (viscosity of 18$mm^2/s$, measured at 100°C), 27g of phenol, 40ml of heptane and 8g of Amberlyst 15 acid catalyst is heated to 80°C for 24-72 hours under an inert atmosphere. The mixture is filtered while hot to remove the solid catalysts. The product is obtained after vacuum distillation (up to 160°C/0.1mm) to remove solvent and excess phenol. The thermal stability of the above alkylphenol is examined by determining the temperature for 50% weight loss using thermal gravimetric analysis (TGA) and by measuring the viscosity loss after heating to 280°C and 300°C for 24 hours under inert atmosphere. In the following Table III the properties and thermal stability of alkylated phenol is compared with a control of hydrogenated HVI-PAO.

Table III

| Property | Control | HVI-PAO alkylated phenol |
|---|---|---|
| Wt % Phenol | 0 | 12.0 |
| Viscosity $mm^2/s$, 100°C | 18.2 | 21.4 |
| Viscosity Index | 164 | 145 |
| Pour Point,°C | <-52 | <-45 |
| Temp. for 50% Wt. loss,°C | 388 | 402 |
| % Viscosity (100°C)Loss @ | | |
| 280°C | 41.6 | 3.0 |
| 300°C | 57.5 | 27.9 |

Table III shows that the HVI-PAO alkylated phenol is more thermally stable than the hydrogenated HVI-PAO control.

The alkylation process alkylating conditions can comprise temperature between -30 and 350°C, pressure between 700 and 7000 kPa.

Example 11

The $C_{20}$ dimer olefins produced from the oligomerization of 1-decene according to the HVI-PAO process are reacted at reflux with toluene (1:1 molar ratio) using aluminum chloride as catalyst (1-2% by weight) until conversion to alkylaromatic is constant as determined by GC. The catalyst is removed and the unreacted material distilled leaving the alkylaromatic fluid.

Example 12

The procedure of Example 11 is followed except that 4% by weight strong acid cation exchange resin (Amberlyst XN-1010, Rohm and Haas) is used as catalyst and the temperature is maintained at 110°C.

Example 13

The procedure of Example 11 is followed except that 1% by weight of trifluoromethanesulfonic acid is used as catalyst and the temperature is maintained at 75°C. The yield is 86% of 750°F fluid.

Example 14

The procedure of Example 11 is followed except that naphthalene is used as aromatic rather than toluene.

Example 15

The procedure of Example 12 is followed except that naphthalene is used rather than toluene.

The results of Examples 4-8 are presented in Table IV.

Table IV

| Fluid | $mm^2/s$ @40°C | $mm^2/s$ @100°C | VI | Pour Pt.°C |
|---|---|---|---|---|
| Example 11 | 29.91 | 5.30 | 110 | -27 |
| Example 12 | 26.85 | 5.29 | 133 | -26 |
| Example 13 | 28.05 | 5.17 | 114 | -32 |

Table IV (continued)

| Fluid | $mm^2/s$ @40°C | $mm^2/s$ @100°C | VI | Pour Pt.°C |
|---|---|---|---|---|
| Example 14 | 114.5 | 12.68 | 103 | |
| Example 15 | 48.92 | 6.90 | 95 | |

In the following Example 16, the alkylation of naphthalene using HVI-PAO 1-decene dimer is presented. The process is carried out in a fixed bed reactor using a Y-type zeolite in the acid form which was extruded with 35 wt% silica.

Example 16

The feed consists of a 5:1 molar ratio (210 grams of napthalenes and 91 grams of decene dimers). 5.6 moles (440 grams) of benzene is added to the feed to solubilize the naphthalene. At a reaction temperature of 250°C 90% of the decene dimer is used for the alkylation. Table V shows the experimental conditions and the conversion of naphthalene as determined by GC for three experiments A,B,C. Also shown in Table V are the viscometrics of the recovered alkylated naphthalene. The conversion of the naphthalene is affected by reaction temperature and is increased as the reaction temperature is raised.

Table V

| Experiment | A | B | C |
|---|---|---|---|
| Reaction Temp, °C | 159 | 200 | 250 |
| Pressure, kPa (psig) | 2860(400) | 2860(400) | 2860(400) |
| LHSV | 0.9 | 0.5 | 0.5 |
| Naphthalene Conv., % | 20.3 | 26.6 | 39.2 |

Viscometrics of Alkyl Naphthalene

| | |
|---|---|
| KV, @40°C | 44.77$mm^2/s$ |
| KV, @100°C | 6.22$mm^2/s$ |
| VI | 79.5 |

In general, alkylaromatic lubricant basestocks are produced from 1-olefins with aromatics. The prior art products, as shown below in Table 3, have lower VI than the products of the present invention.

Table VI

| Basestock | $mm^2/s$@40°C | $mm^2/s$@100°C | VI | Pour Pt.°C |
|---|---|---|---|---|
| ECA5381 | 14.35 | 2.94 | 20 | <-50 |
| ECA6482 | 96.68 | 8.00 | 8 | -33 |
| Alkyltoluene from HVI-PAO | 29.94 | 5.30 | 110 | -27 |

The products of the instant invention are useful as lubricant basestock and as additives. The aromatic moiety introducted into HVI-PAO increases thermal stability, increases solubilizing power of the product and adds other properties useful in additives such as antiwear properties and VI enhancement. Therefore, as additives, their usefulness is compounded to incorporate in a single additive product the capability to improve a lube basestock thermal stability, VI, solvency and seal swelling power as well as improving antiwear characteristics. They possess the further advantage of great flexibility in the range of viscosity in which they can be prepared so that their additive properties can

be used in a viscosity compatible with the viscosity formulation of the lube basestock. The lubricant compositions of the instant invention can be useful as additives such as dispersants, detergents, viscosity index improvers, extreme pressure/antiwear additives, antioxidants, pour depressants, emulsifiers, demulsifiers, corrosion inhibitors, antirust inhibitors, antistaining additives, friction modifiers, and the like.

The process for the alkylation of phenols with HVI-PAO dimer according to the present invention and the products produced are believed to be novel and useful. It has been found that alkylphenols can be prepared in near quantitative yields from phenol or hindered phenols such as 2,6-ditertiarybutyl phenol by alkylation with $C_{20}$ HVI-PAO olefins by acid catalysis. The preferred acid for the catalysis is trifluoromethanesulfonic acid. Amberlyst XN-1010 (obtainable from Rohm and Haas), a strong acid cation-exchange resin, or Lewis acids such as aluminum chloride also work but give lower yields. These alkylphenols find use as lubricant basestock and lubricant additives and precursors to more highly functionalized lubricant additives.

Alkylated phenol derivatives of the present invention have many beneficial uses such as lubricant additives both as-is and when further functionalized. The functions of alkylphenols and their further derivatized products include:

1. Antioxidant as neat phenols or when reacted with 1-naphthyl amine to give N-arylnaphthylamines.
2. Antiwear as phenol phosphates.
3. Detergent as phenol sulfides.
4. Antiwear, anticorrosion and antioxidant as metal dialkyldithiophosphates.
5. Detergent and antioxidant as metal alkylsalicylates.
6. Detergent and dispersant as alkylhydroxybenzylpolyamines.

In all cases additives used for these functions are either an alkylphenol or are synthesized from an alkylphenol. Generally the alkyl group of the phenol serves the important function of increasing the oil solubility of the phenol or its derivative. Long alkyl chains are in general preferable for good oil solubility. Twenty carbon olefins produced from dimerization of 1-decene are highly reactive towards phenol(s) under conditions of acid catalysis and can serve as good intermediates to numerous lubricant additives.

Typically in the prior art alkylphenols derived from isobutylene oligomers are used as the precursors to the above mentioned additives based upon alkylphenols. Although such additives based upon isobutylene oligomers are relatively inexpensive, in some applications they have stability problems. The alkylphenol disclosed here can have similar performance features without the instabilities associated with the isobutylene-derived alkyl groups. In addition, these alkylphenols are of sufficiently low viscosity to be effective as alkylaromatic-type basestocks for lubricant product formulations.

The alkylphenols are prepared by mixing at 25°C equal molar amounts of the phenol and olefin and then adding 1-2% by weight trifluoromethanesulfonic acid with vigorous stirring. The acid is removed by conventional means to give the alkylphenols in 90% yield or greater. Other acid catalyst may be used such as strong acid cation-exchange resins or strong Bronsted or Lewis acids, however, trifluoromethanesulfonic acid gives the best results.

Example 17

Equal molar amounts of phenol and $C_{20}$ HVI-PAO dimer olefin of 1-decene prepared as described herein are mixed and then 1.4% by weight trifluoromethanesulfonic acid is added to the vigorously stirred mixture. After 1hr. the acid is removed by water washing and the small amount of unreacted starting materials is removed by distillation. The yield of para-substituted $C_{20}$ alkylphenols is 94%. The product mixture has a kinematic viscosity of 10.36mm$^2$/s at 100°C and a VI of 4.

Example 18

Equal molar amounts of 2,6-di-tert-butylphenol and $C_{20}$ olefin of 1-decene prepared as described herein are mixed and then 1.6% by weight trifluoromethanesulfonic acid is added to the vigorously stirred mixture. After 1hr. the acid is removed by water washing and the small amount of unreacted starting materials is removed by distillation. The yield of the $C_{20}$ alkylphenol is 90%. The liquid product has a kinematic viscosity of 7.79mm$^2$/s at 100°C and a VI of 51.

Mono-alkylated hindered phenols can also be prepared by alkylating a 2,6-ditertiarybutyl phenol with by-product dimer derived from the synthesis of HVI-PAO by oligomerization of 1-decene over a chromium on silica catalyst. The alkylation is catalyzed by a hydrogen Y zeolite bound with silica. Because of the shape-selective nature of the zeolite, only a mono-alkylated product is formed.

Example 19

The mono-alkylation process is carried out using a fixed-bed reactor. The hydrogen Y zeolite is bound with 35 weight % silica. The feed is comprised of 1:1 molar ratio (103 grams of 2,6 ditertiarybutyl phenol and 140 grams of 1-decene dimers prepared as described herein).

The reactor pressure is maintained at 1482 kPa (200 psig). The liquid hourly space velocity is varied between 1.2 and 0.6. The process was conducted using three reaction temperatures: 100, 157 and 222°C.

At the various reaction temperatures, the yields of mono-alkylated phenol, according to gas chromatographic analysis are, 4.4, 6.6 and 11.0 % respectively. These yields are on a "once-through" basis and may be increased by recycle of the reactants.

Table VII shows some of the characterization of the mono-alkylated phenol with respect to elemental analysis and molecular weight determinations, consistent with mono-alkylation of phenol by dimer.

Table VII

| Example 12 Hindered Phenol Characterization for $C_{34}H_{62}O$ | | |
|---|---|---|
| | Elemental Analysis | |
| | Calculated | Found |
| Carbon | 83.95 | 84.09 |
| Hydrogen | 12.76 | 12.60 |
| Oxygen | 3.29 | 2.76 |
| | 100.0 | 99.45 |
| | Molecular Weight | |
| | Calculated | Found |
| | 486 | 450 |

Any alkylatable phenol, including polynuclear phenols, may be used in the present invention for alkylation with olefinic dimer of alpha olefins described herein. Particularly useful phenols include phenol itself, 2,6-dimethyl phenol, 2,6-ditertiarybutyl phenol, 2-chlorophenol, 4-chlorophenol, 2,6 and 2,4-dichlorophenol, 2 and 4-acetamidophenol, 2 and 4-carboalkoxy phenol, 2 and 4-nitrophenol and 2 and 4-methoxyphenol.

The use of the novel alkylated or functionalized compositions of the present invention as lubrication fluids and additives in either a mineral or synthetic lubricant is unique and provides unprecedented performance benefit due to the inherent internal synergism. The process of enhancement of lubricating properties by addition of these compositions to either mineral or synthetic lubricants is surprising. For example, the process of improving wear, friction, corrosion inhibition, thermal and/or oxidative stability of a high temperature, high viscosity olefin oligomer via the addition of 0.1-100% of an alkylation product of the present invention and chromium-catalyzed polyalpha-olefin is unique and not manifested in prior art. Additionally, the combination of lubricant formulations containing the above compositions with any of the following supplemental additives: dispersants, detergents, viscosity index improvers, extreme pressure/antiwear additives, antioxidants, pour depressants, emulsifiers, demulsifiers, corrosion inhibitors, antirust inhibitors, antistaining additives, friction modifiers, and the like are novel.

Although the present invention has been described with preferred embodiments and examples, it is to be understood that modifications and variations may be resorted to without departing from the spirit and scope of this invention, as those skilled in the art will readily understand. Such modifications and variations are considered to be within the purview and scope of the appended claims.

**Claims**

**1.** An alkylaromatic hydrocarbon composition having at least one of the following structures

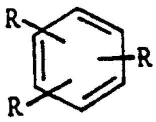 , 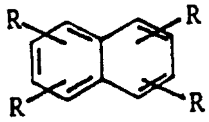 ,

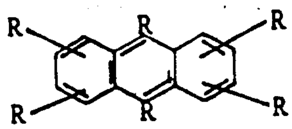 and 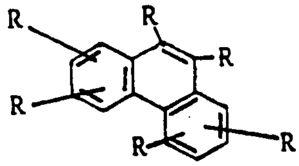

where at least one R group is the hydrocarbyl residue of the oligomerization of $C_2$-$C_{20}$ 1-alkene under oligomerization conditions in contact with supported reduced metal oxide catalyst comprising a lower valence state form of at least one Group VI B catalyst, the residue comprising $C_{20}$ to $C_{1300}$ hydrocarbons having a branch ratio less than 0.19, weight average molecular weight between 280 and 450,000, number average molecular weight between 280 and 180,000, molecular weight distribution between 1 and 5 and a pour point below -15°C; and wherein the remaining R groups are selected from hydrogen, $C_1$-$C_{20}$ cyclic or acyclic alkyl and alkenyl, aryl, $NH_2$, acylamido, halogen, acyl, $NO_2$, YO and YS where Y is hydrogen, acyl, alkoxycarbonyl, phenyl and $C_1$-$C_{20}$ cyclic or acyclic alkyl and alkenyl.

**2.** The composition of claim 1 wherein at least one R group comprises an alkyl group, the alkyl group comprising the hydrocarbyl moiety of the olefinic dimer of $C_6$-$C_{20}$ 1-alkene.

**3.** The composition of claim 1 or 2 comprising the hydrogenation product of the alkylaromatic hydrocarbon having a bromine number between 0 and 12.

**4.** The composition of any one of the preceding claims wherein the alkylaromatic has a viscosity index greater than 130 and pour point below -15°C.

**5.** The composition of any one of the preceding claims wherein the alkylaromatic has a viscosity at 100°C between $2mm^2/s$ and $1000mm^2/s$.

**6.** The composition of any one of the preceding claims wherein the hydrocarbyl residue contains between 20 and 1300 carbon atoms having a branch ratio less than 0.19.

**7.** The composition of any one of the preceding claims wherein the hydrocarbyl residue has a molecular weight distribution between 1.05 and 2.5.

**8.** The composition of any one of the preceding claims wherein the alkylaromatic comprises alkylated anisole, alkylated naphthalene, alkylated toluene or alkylated pseudocumene.

**9.** The composition of claim 9 wherein the aromatic compound is selected from benzene, toluene, o,m,p-xylene, hemimellitene, pseudocumene, ethylbenzene, n-propylbenzene, cumene, n-butylbenzene, isobutylbenzene, sec-butylbenzene, tert-butylbenzene, p-cymene, biphenyl, diphenylmethane, triphenylmethane, 1,2-diphenylethane and similarly alkyl or aryl substituted naphthalene and anthracene; also phenol, catechol, anisole, chlorobenzene, diphenylcarbonate, aniline, acetanilide, ethylbenzoate, thiophenol, alkylphenylsulfide, nitrobenzene, diphenylether, diphenylsulfide, 1-hydroxy and 2-hydroxy naphthalene and similarly substituted anthracene.

**10.** The composition of claim 9 comprising the hydrogenation product of the alkylated aromatic hydrocarbon having a bromine number between 0 and 12.

**11.** The composition of claim 9 or 10 wherein the alkylation product has a viscosity index greater than 130 and a pour point below -15°C.

**12.** The composition of claim 9, 10 or 11 wherein the alkylation product has a viscosity at 100°C between $2mm^2/s$ and

500mm$^2$/s.

**13.** A process for the preparation of the alkylaromatic oligomers of any preceding claim comprising:

contacting at least one alkylatable aromatic compound and $C_{20}$-$C_{1300}$ olefinic hydrocarbon oligomer comprising the reaction product of the oligomerization under oligomerization conditions of $C_2$-$C_{20}$ 1-alkene in contact with supported reduced metal oxide catalyst; the metal oxide catalyst comprising a lower valence state form of at least one Group VIB metal and having a branch ratio less than 0.19 and pour point less than -15°C in an alkylation zone with an acidic alkylation catalyst under alkylation conditions whereby alkylated aromatic oligomer is produced having a viscosity index greater than 130;
separating and recovering the alkylated aromatic oligomer.

**14.** The process of claim 13 wherein the alkylated aromatic hydrocarbon comprises alkylaromatic lubricant basestock or additive having improved thermal stability.

**15.** The process of claim 13 or 14 wherein the alkylating conditions comprise a temperature between -30 and 350°C, and a pressure between 700 and 7000 kPa.

**16.** The process of claim 13, 14 or 15 wherein the acidic alkylation catalyst comprises a Lewis acid selected from $BF_3$, $AlCl_3$, HCl, HF, HBr, $H_2SO_4$, $H_3PO_4$, $P_2O_5$, $SO_3$, $SnCl_4$, $FeCl_3$, $ZnCl_2$, $TiCl_4$, $SbCl_5$, acidic zeolites selected from H-ZSM-5, zeolite Y, and amorphous aluminosilicates and organic acids selected from R-$SO_3$H where R is a polymeric resin comprising sulfonated polystyrene.

**17.** The process of claim 13, 14, 15 or 16 wherein the supported reduced metal oxide catalyst comprises carbon monoxide reduced chromium oxide on silica support.

**18.** The process of claim 13, 14, 15, 16 or 17 wherein the oligomerization conditions comprise temperature between 90 and 250°C.

**19.** The process of claim 13, 14, 15, 16, 17 or 18 wherein the aromatic compound comprises substituted or unsubstituted benzene, naphthalene or anthracene.

**20.** A method for decreasing wear and reducing friction in an internal combustion engine by lubricating the engine with a friction reducing amount of the composition of claim 1.

**21.** The lubricant composition of claim 1 further comprising lubricant additives selected from dispersants, detergents, viscosity index improvers, extreme pressure/antiwear additives, antioxidants, pour depressants, emulsifiers, demulsifiers, corrosion inhibitors, antirust inhibitors, antistaining additives, and friction modifiers.

**22.** A method for improving the viscosity index and thermal stability of lubricant basestock comprising mixing with the lubricant basestock a VI and thermal stability enhancing amount of the composition of claim 1.

**23.** The process of claim 19 wherein the aromatic compound comprises phenol, anisole or naphthol.

**24.** The composition of claim 1 wherein alkylaromatic comprises alkylated benzene.

**25.** The composition of claim 2 wherein the dimer alkyl group is contained in anisole, naphthalene, toluene, pseudocumene or 2,6-ditertiarybutyl phenol.

**26.** The composition of claim 1 wherein the aromatic compound is selected from benzene, toluene, o,m,p-xylene, hemimellitene, pseudocumene, ethylbenzene, n-propylbenzene, cumene, n-butylbenzene, isobutylbenzene, sec-butylbenzene, tert-butylbenzene, p-cymene, biphenyl, diphenylmethane, triphenylmethane, 1,2-diphenylethane and similarly alkyl or aryl substituted naphthalene and anthracene; phenol, 2,6-ditertiarybutyl phenol, 2,6-dimethylphenol, catechol, anisole, chlorobenzene, diphenylcarbonate, aniline, acetanilide, ethylbenzoate, thiophenol, alkylphenylsulfide, nitrobenzene, diphenylether, diphenylsulfide, 1-hydroxy and 2-hydroxy naphthalene and similarly substituted anthracene.

**27.** The composition of claim 26 comprising the hydrogenation product of the alkylated aromatic hydrocarbon.

**28.** The lubricant composition of claim 26 or 27 further comprising lubricant additives selected from dispersants, detergents, viscosity index improvers, extreme pressure/antiwear additives, antioxidants, pour depressants, emulsifiers, demulsifiers, corrosion inhibitors, antistaining additives, and friction modifiers.

## Patentansprüche

**1.** Alkylaromatische Kohlenwasserstoffzusammensetzung mit mindestens einer der folgenden Strukturen

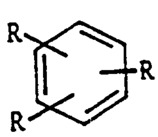
,
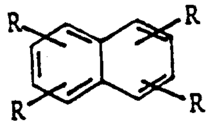
,

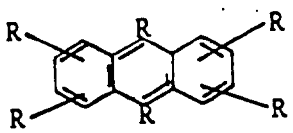
und
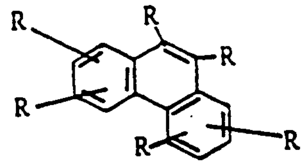

worin mindestens einer der Reste R ein Hydrocarbylrest von der Oligomerisierung von $C_2$-$C_{20}$-1-Alken bei Oligomerisierungsbedingungen im Kontakt mit einem Katalysator aus einem getragenen, reduzierten Metalloxid ist, der eine Form mit geringerem Wertigkeitszustand von mindestens einem Katalysator der Gruppe VIB umfaßt, wobei dieser Rest $C_{20}$-$C_{1300}$-Kohlenwasserstoffe mit einem Verzweigungsverhältnis von weniger als 0,19, einem Gewichtsmittel des Molekulargewichts zwischen 280 und 450.000, einem Zahlenmittel des Molekulargewichts zwischen 280 und 180.000, einer Molekulargewichtsverteilung zwischen 1 und 5 und einem Pourpoint unter -15°C umfaßt, und wobei die restlichen Reste R aus einem Wasserstoffatom, einer cyclischen oder acyclischen $C_1$-$C_{20}$-Alkyl- und Alkenylgruppe, einer Aryl-, $NH_2$-, Acylamidogruppe, einem Halogenatom, einer Acyl-, $NO_2$-, YO- und YS-Gruppe ausgewählt sind, worin Y ein Wasserstoffatom, eine Acyl-, Alkoxycarbonyl-, Phenyl- und cyclische oder alicyclische $C_1$-$C_{20}$-Alkyl- und Alkenylgruppe ist.

**2.** Zusammensetzung nach Anspruch 1, wobei mindestens einer der Reste R eine Alkylgruppe umfaßt, wobei die Alkylgruppe die Hydrocarbyl-Einheit des olefinischen Dimers von $C_6$-$C_{20}$-1-Alken umfaßt.

**3.** Zusammensetzung nach Anspruch 1 oder 2, die das Hydrierungsprodukt eines alkylaromatischen Kohlenwasserstoffs mit einer Bromzahl zwischen 0 und 12 umfaßt.

**4.** Zusammensetzung nach einem der vorstehenden Ansprüche, wobei der alkylaromatische Kohlenwasserstoff einen Viskositätsindex von mehr als 130 und einen Pourpoint von weniger als -15°C hat.

**5.** Zusammensetzung nach einem der vorstehenden Ansprüche, wobei der alkylaromatische Kohlenwasserstoff eine Viskosität bei 100°C zwischen 2 und 1000 $mm^2/s$ hat.

**6.** Zusammensetzung nach einem der vorstehenden Ansprüche, wobei der Hydrocarbylrest 20 bis 1300 Kohlenstoffatome mit einem Verzweigungsverhältnis von weniger als 0,19 enthält.

**7.** Zusammensetzung nach einem der vorstehenden Ansprüche, wobei der Hydrocarbylrest eine Molekulargewichtsverteilung zwischen 1,05 und 2,5 hat.

**8.** Zusammensetzung nach einem der vorstehenden Ansprüche, wobei der alkylaromatische Kohlenwasserstoff alkyliertes Anisol, alkyliertes Naphthalin, alkyliertes Toluol oder alkyliertes Pseudocumol umfaßt.

**9.** Zusammensetzung nach Anspruch 9, wobei die aromatische Verbindung aus Benzol, Toluol, o,m,p-Xylol, Hemimellitol, Pseudocumol, Ethylbenzol, n-Propylbenzol, Cumol, n-Butylbenzol, Isobutylbenzol, sek.-Butylbenzol, tert.-Butylbenzol, p-Cumol, Biphenyl, Diphenylmethan, Triphenylmethan, 1,2-Diphenylethan und ähnlich mit Alkyl oder Aryl substituiertem Naphthalin und Anthracen, auch Phenol, Catechin, Anisol, Chlorbenzol, Diphenylcarbonat, Anilin, Acetanilid, Ethylbenzoat, Thiophenol, Alkylphenylsulfid, Nitrobenzol, Diphenylether, Diphenylsulfid, 1-Hydroxy- und 2-Hydroxynaphthalin und ähnlich substituiertem Anthracen ausgewählt ist.

**10.** Zusammensetzung nach Anspruch 9, die das Hydrierungsprodukt eines alkylierten aromatischen Kohlenwasserstoffs mit einer Bromzahl zwischen 0 und 12 umfaßt.

**11.** Zusammensetzung nach Anspruch 9 oder 10, wobei das Alkylierungsprodukt einen Viskositätsindex von mehr als 130 und einen Pourpoint von weniger als -15°C hat.

**12.** Zusammensetzung nach Anspruch 9, 10 oder 11, wobei das Alkylierungsprodukt eine Viskosität bei 100°C zwischen 2 und 500 $mm^2/s$ hat.

**13.** Verfahren zur Herstellung alkylaromatischer Oligomere nach einem der vorstehenden Ansprüche, welches umfaßt:

Kontakt von mindestens einer alkylierbaren aromatischen Verbindung und einem olefinischen $C_{20}$-$C_{1300}$-Kohlenwasserstoffoligomer, umfassend das Reaktionsprodukt der Oligomerisierung von $C_2$-$C_{20}$-1-Alken bei Oligomerisierungsbedingungen im Kontakt mit einem Katalysator aus einem getragenen, reduzierten Metalloxid, wobei der Metalloxidkatalysator eine Form mit geringerem Wertigkeitszustand von mindestens einem Metall der Gruppe VIB umfaßt, und mit einem Verzweigungsverhältnis von weniger als 0,19 und einem Pourpoint von weniger als -15°C in einer Alkylierungszone mit einem sauren Alkylierungskatalysator bei Alkylierungsbedingungen, wodurch ein alkyliertes, aromatisches Oligomer mit einem Viskositätsindex von mehr als 130 erzeugt wird,
Abtrennen und Gewinnen des alkylierten aromatischen Oligomers.

**14.** Verfahren nach Anspruch 13, wobei der alkylierte aromatische Kohlenwasserstoff ein alkylaromatisches Schmiermittelgrundmaterial oder ein Additiv mit besserer Wärmebeständigkeit umfaßt.

**15.** Verfahren nach Anspruch 13 oder 14, wobei die Alkylierungsbedingungen eine Temperatur zwischen -30 und 350°C und einen Druck zwischen 700 und 7000 kPa umfassen.

**16.** Verfahren nach Anspruch 13, 14 oder 15, wobei der saure Alkylierungskatalysator eine Lewis-Säure umfaßt, ausgewählt aus $BF_3$, $AlCl_3$, HCl, HF, HBr, $H_2SO_4$, $H_3PO_4$, $P_2O_5$, $SO_3$, $SnCl_4$, $FeCl_3$, $ZnCl_2$, $TiCl_4$, $SbCl_5$, sauren Zeolithen, ausgewählt aus H-ZSM-5, Zeolith Y und amorphen Aluminosilicaten, und organischen Säuren, ausgewählt aus $R$-$SO_3H$, wobei R ein Polymerharz ist, das sulfoniertes Polystyrol umfaßt.

**17.** Verfahren nach Anspruch 13, 14, 15 oder 16, wobei der Katalysator aus einem getragenen, reduzierten Metalloxid mit Kohlenmonoxid reduziertes Chromoxid auf einem Siliciumdioxidträger umfaßt.

**18.** Verfahren nach Anspruch 13, 14, 15, 16 oder 17, wobei die Oligomerisierungsbedingungen eine Temperatur zwischen 90 und 250°C umfassen.

**19.** Verfahren nach Anspruch 13, 14, 15, 16, 17 oder 18, wobei die aromatische Verbindung substituiertes oder unsubstituiertes Benzol, Naphthalin oder Anthracen umfaßt.

**20.** Verfahren zur Verringerung des Verschleißes und zur Verminderung der Reibung in einem Verbrennungsmotor durch Schmieren des Motors mit einer die Reibung vermindernden Menge einer Zusammensetzung nach Anspruch 1.

**21.** Schmiermittelzusammensetzung nach Anspruch 1, die außerdem Schmiermittel-Additive, ausgewählt aus Dispersionsmitteln, Detergentien, Mitteln zur Verbesserung des Viskositätsindex, EP-Additiven/Verschleißschutz-Additiven, Antioxidantien, Mitteln zur Herabsetzung des Pourpoints, Emulgatoren, Demulgatoren, Korrosionsinhibitoren, Rostinhibitoren, Fleckenschutz-Additiven und Reibungsmodifikationsmitteln, umfaßt.

**22.** Verfahren zur Verbesserung des Viskositätsindex und der Wärmebeständigkeit eines Schmiermittelgrundmaterials, das das Mischen einer den VI und die Wärmebeständigkeit verbessernden Menge einer Zusammensetzung nach Anspruch 1 mit dem Schmiermittelgrundmaterial umfaßt.

**23.** Verfahren nach Anspruch 19, wobei die aromatische Verbindung Phenol, Anisol oder Naphthol umfaßt.

**24.** Zusammensetzung nach Anspruch 1, wobei der alkylaromatische Kohlenwasserstoff alkyliertes Benzol umfaßt.

**25.** Zusammensetzung nach Anspruch 2, wobei die dimere Alkylgruppe in Anisol, Naphthalin, Toluol, Pseudocumol oder 2,6-Di-tert.-butylphenol enthalten ist.

**26.** Zusammensetzung nach Anspruch 1, wobei die aromatische Verbindung aus Benzol, Toluol, o,m,p-Xylol, Hemimellitol, Pseudocumol, Ethylbenzol, n-Propylbenzol, Cumol, n-Butylbenzol, Isobutylbenzol, sek.-Butylbenzol, tert.-Butylbenzol, p-Cumol, Biphenyl, Diphenylmethan, Triphenylmethan, 1,2-Diphenylethan und ähnlich mit Alkyl oder Aryl substituiertem Naphthalin und Anthracen, Phenol, 2,6-Di-tert.-butylphenol, 2,6-Dimethylphenol, Catechin, Anisol, Chlorbenzol, Diphenylcarbonat, Anilin, Acetanilid, Ethylbenzoat, Thiophenol, Alkylphenylsulfid, Nitrobenzol, Diphenylether, Diphenylsulfid, 1-Hydroxy- und 2-Hydroxynaphthalin und ähnlich substituiertem Anthracen ausgewählt ist.

**27.** Zusammensetzung nach Anspruch 26, die das Hydrierungsprodukt eines alkylierten, aromatischen Kohlenwasserstoffs umfaßt.

**28.** Schmiermittelzusammensetzung nach Anspruch 26 oder 27, die außerdem Schmiermittel-Additive, ausgewählt aus Dispersionsmitteln, Detergentien, Mitteln zur Verbesserung des Viskositätsindex, EP-Additiven/Verschleißschutz-Additiven, Antioxidantien, Mitteln zur Herabsetzung des Pourpoints, Emulgatoren, Demulgatoren, Korrosionsinhibitoren, Fleckenschutz-Additiven und Reibungsmodifikationsmitteln, umfaßt.

**Revendications**

**1.** Une composition hydrocarbonée alkylaromatique ayant au moins l'une des structures suivantes :

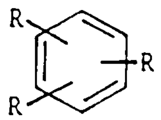 , 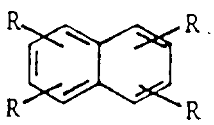 ,

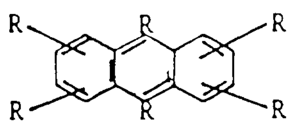 et 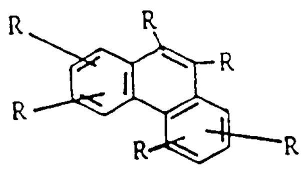

dans lesquelles au moins un groupe R est un reste hydrocarbyle de l'oligomérisation d'un 1-alkène en $C_2$-$C_{20}$ dans des conditions d'oligomérisation en contact avec un catalyseur à base d'oxyde métallique réduit supporté comprenant une forme à un état de valence inférieur d'au moins un catalyseur du groupe VI B, le résidu comprenant des hydrocarbures en $C_{20}$ à $C_{1300}$ ayant un rapport de ramification inférieur 0,19, une masse moléculaire moyenne en poids comprise entre 280 et 450 000, une masse moléculaire moyenne en nombre comprise entre 280 et 180 000, une distribution de masse moléculaire comprise entre 1 et 5, et un point de coulée inférieur à -15°C et dans lesquelles les autres groupes R sont choisis parmi hydrogène, alkyle et alkényle cyclique ou acyclique en $C_1$-$C_{20}$, aryle $NH_2$, acylamido, halogène, acyle, $NO_2$, YO et YS, où Y est l'hydrogène, un acyle, un alcoxycarbonyle, un phényle et un alkyle et alkényle cyclique ou acyclique en $C_1$-$C_{20}$.

**2.** La composition selon la revendication 1, dans laquelle au moins un groupe R comprend un groupe alkyle, le groupe alkyle comprenant le reste hydrocarbyle du dimère oléfinique de 1-alkène en $C_6$-$C_{20}$.

**3.** La composition selon la revendication 1 ou 2, comprenant le produit d'hydrogénation de l'hydrocarbure alkylaromatique avant un indice de brome compris entre 0 et 12.

**4.** La composition selon l'une quelconque des revendications précédentes, dans laquelle l'alkylaromatique présente

un indice de viscosité supérieur à 130 et un point de coulée inférieur à -15°C.

**5.** La composition selon l'une quelconque des revendications précédentes, dans laquelle l'alkylaromatique a une viscosité à 100°C comprise entre 2 $mm^2$/s et 1000 $mm^2$/s.

**6.** La composition selon l'une quelconque des revendications précédentes, dans laquelle le résidu hydrocarbyle contient de 20 à 1300 atomes de carbone en avant un rapport de ramification inférieur à 0,19 .

**7.** La composition selon l'une quelconque des revendications précédentes, dans laquelle le résidu hydrocarbyle a une distribution de masse moléculaire comprise entre 1,05 et 2,5.

**8.** La composition selon l'une quelconque des revendications précédentes, dans laquelle l'alkylaromatique comprend anisole alkylé, naphtalène alkylé, et toluène alkylé ou pseudocumène alkylé.

**9.** La composition selon la revendication 9, dans laquelle le composé aromatique est choisi parmi benzène, toluène, o,m,p-xylène, hémimellitène, pseudocumène, éthylbenzène, n-propylbenzène, cumène, n-butylbenzène, isobutylbenzène, sec-butylbenzène, tert-butylbenzène, p-cymène, biphényle, diphénylméthane, triphénylméthane, 1,2-diphényléthane et des naphtalènes et des anthracènes substitués de même par des alkyles ou aryles ; en outre, phénol, catéchol, anisole, chlorobenzène, diphénylcarbonate, aniline, acétanilide, éthylbenzoate, thiophénol, alkylphénylsulfure, nitrobenzène, diphényléther, diphénylsulfure, 1-hydroxy et 2-hydroxy-naphtallène et anthracène similairement substitués.

**10.** La composition selon la revendication 9, comprenant le produit de l'hydrogénation d'un hydrocarbure aromatique alkylé ayant un indice de brome compris entre 0 et 12.

**11.** La composition selon la revendication 9 ou 10, dans laquelle le produit d'alkylation présente un indice de viscosité supérieur à 130 et un point de coulée inférieur à -15°C.

**12.** La composition selon la revendication 9, 10 ou 11, dans laquelle le produit d'alkylation a une viscosité à 100°C comprise entre 2 $mm^2$/s et 500 $mm^2$/s.

**13.** Un procédé de préparation d'oligomères alkylaromatiques selon l'une quelconque des revendications précédentes, comprenant :

- la mise en contact d'au moins un dérivé aromatique alkylable et un oligomère hydrocarboné oléfinique en $C_{20}$ à $C_{1300}$, comprenant le produit de la réaction de l'oligomérisation dans des conditions d'oligomérisation d'un 1-alkène en $C_2$ à $C_{20}$ en contact avec un catalyseur d'oxyde métallique réduit supporté ; le catalyseur d'oxyde métallique comprenant une forme à un état de valence inférieur d'au moins un métal du groupe VIB et ayant un rapport de ramification inférieur à 0,19 et un point de coulée inférieur à -15°C dans une zone d'alkylation avec un catalyseur d'alkylation acide dans des conditions d'alkylation de sorte que l'on obtienne l'oligomère aromatique alkylé ayant un indice de viscosité supérieur à 130 ;
- la séparation et l'isolement de l'oligomère aromatique alkylé.

**14.** Le procédé selon la revendication 13, dans lequel l'hydrocarbure aromatique alkylé comprend des bases de lubrifiant ou des additifs de lubrifiant alkylaromatiques ayant une meilleure stabilité thermique.

**15.** Le procédé selon la revendication 13 ou 14, dans lequel les conditions d'alkylation comprennent une température comprise entre -30°C et +350°C et une pression comprise entre 700 et 7000 kPa.

**16.** Le procédé selon la revendication 13, 14 ou 15, dans lequel le catalyseur d'alkylation acide comprend un acide de Lewis choisi parmi $BF_3$, $AlCl_3$, HCl, HF, HBr, $H_2SO_4$, $H_3PO_4$, $P_2O_5$, $SO_3$, $SnCl_4$, $FeCl_3$, $ZnCl_2$, $TiCl_4$, $SbCl_5$, zéolites acides choisies parmi H-ZSM-5, zéolite Y, et aluminosilicates amorphes et acides organiques choisis parmi R-$SO_3H$, où R est une résine polymère comprenant du polystyrène sulfonaté.

**17.** Le procédé selon la revendication 13, 14, 15 ou 16, dans lequel le catalyseur à base d'oxyde métallique réduit supporté comprend de l'oxyde de chrome réduit par le monoxyde de carbone sur un support de silice.

**18.** Le procédé selon la revendication 13, 14, 15, 16 ou 17, dans lequel les conditions d'oligomérisation comprennent

une température comprise entre 90 et 250°C.

19. Le procédé selon la revendication 13, 14, 15, 16, 17 ou 18, dans lequel le dérivé aromatique comprend le benzène, le naphtalène ou l'anthracène substitués ou non substitués.

20. Un procédé pour diminuer l'usure et la friction dans un moteur à combustion interne par lubrification du moteur à l'aide d'une quantité anti-friction de composition selon la revendication 1.

21. La composition lubrifiante selon la revendication 1, comprenant en outre des additifs de lubrifiant choisis parmi les agents dispersants, détergents, améliorateurs de l'indice de viscosité, additifs extrême pression/anti-usure, anti-oxydants, dépresseurs de point de coulée, émulsifiants, démulsifiants, inhibiteurs de corrosion, inhibiteurs anti-rouille, additifs anti-salissure et modificateurs de friction.

22. Un procédé pour améliorer l'indice de viscosité et la stabilité thermique d'une base de lubrifiant comprenant le mélange avec la base de lubrifiant d'une quantité améliorant la stabilité thermique et le VI d'une composition selon la revendication 1.

23. Le procédé selon la revendication 19, dans lequel le composé aromatique comprend le phénol, l'anisole ou le naphtol.

24. La composition selon la revendication 1, dans laquelle le dérivé alkylaromatique comprend le benzène alkylé.

25. La composition selon la revendication 2, dans laquelle le groupe alkyle dimère est présent dans l'anisole, le naphtalène, le toluène, le pseudo-cumène ou le 2,6-di-tert-butylphénol.

26. La composition selon la revendication 1, dans laquelle le composé aromatique est choisi parmi benzène, toluène, o,m,p-xylène, hémimellitène, pseudo-cumène, éthylbenzène, n-propylbenzène, cumène, n-butylbenzène, isobutylbenzène, sec-butylbenzène, tert-butylbenzène, p-cymène, biphényle, diphénylméthane, triphénylméthane, 1,2-diphényléthane et des naphtalènes et des anthracènes substitués de façon analogue par des alkyles ou aryles ; phénol, 2,6-ditertiarybutylphénol, 2,6-diméthylphénol, catéchol, anisole, chlorobenzène, diphénylcarbonate, aniline, acétanilide, benzoate d'éthyle, thiophénol, alkylphénylsulfure, nitrobenzène, diphényléther, diphénylsulfure, 1-hydroxy et 2-hydroxy-naphtallène et anthracène similairement substitué.

27. La composition selon la revendication 26, comprenant le produit d'hydrogénation de l'hydrocarbure aromatique alkylé.

28. La composition lubrifiante selon la revendication 26 ou 27 comprenant en outre des additifs de lubrifiant choisis parmi dispersants, détergents, améliorateurs de l'indice de viscosité, additifs extrême pression/anti-usure, anti-oxydants, dépresseurs de point de coulée, émulsifiants, démulsifiants, inhibiteurs de corrosion, anti-tache et agents modifiant la friction.

# FIG. 1

**HVI-PAO REACTION** | **PAO REACTION**

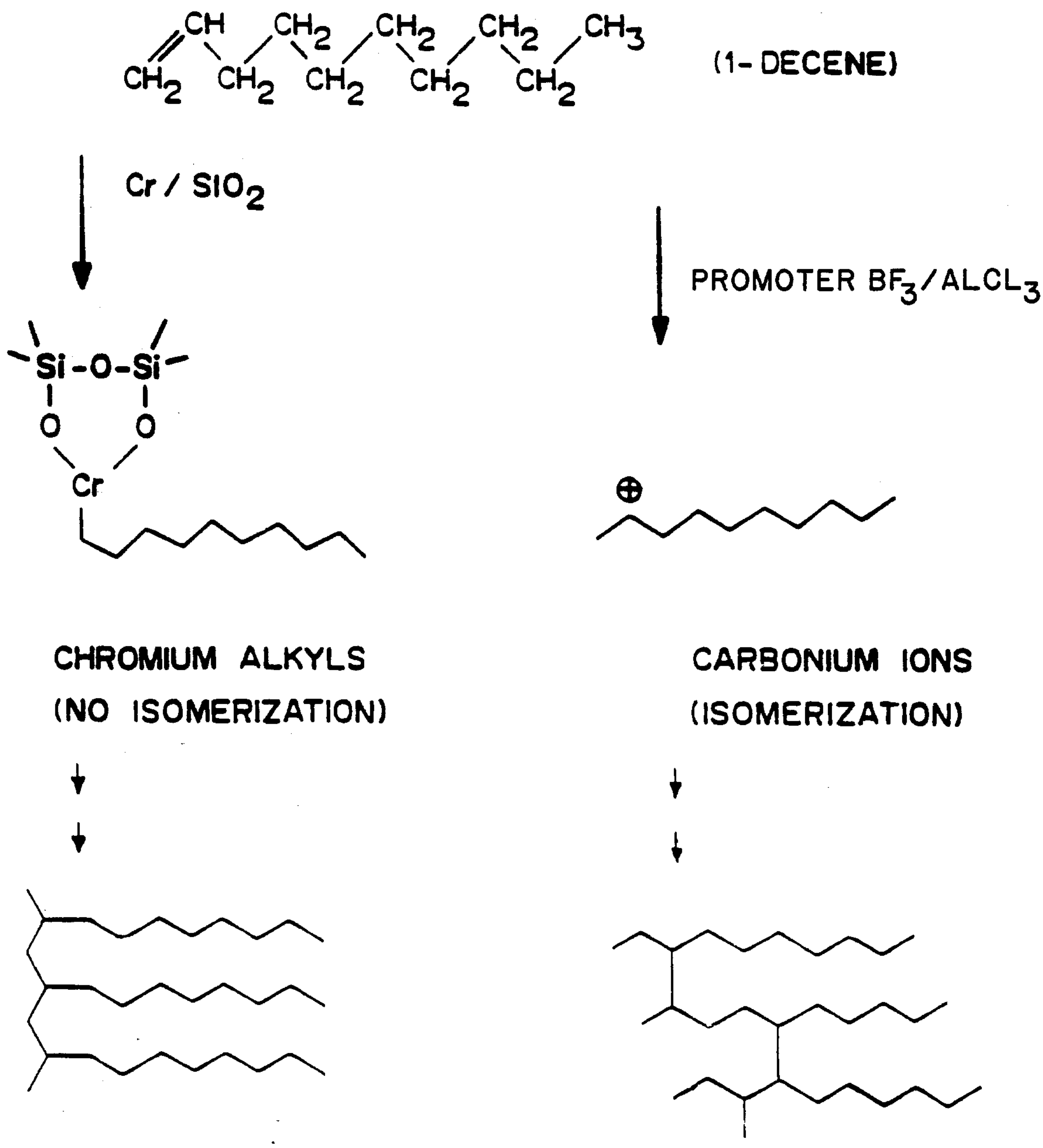

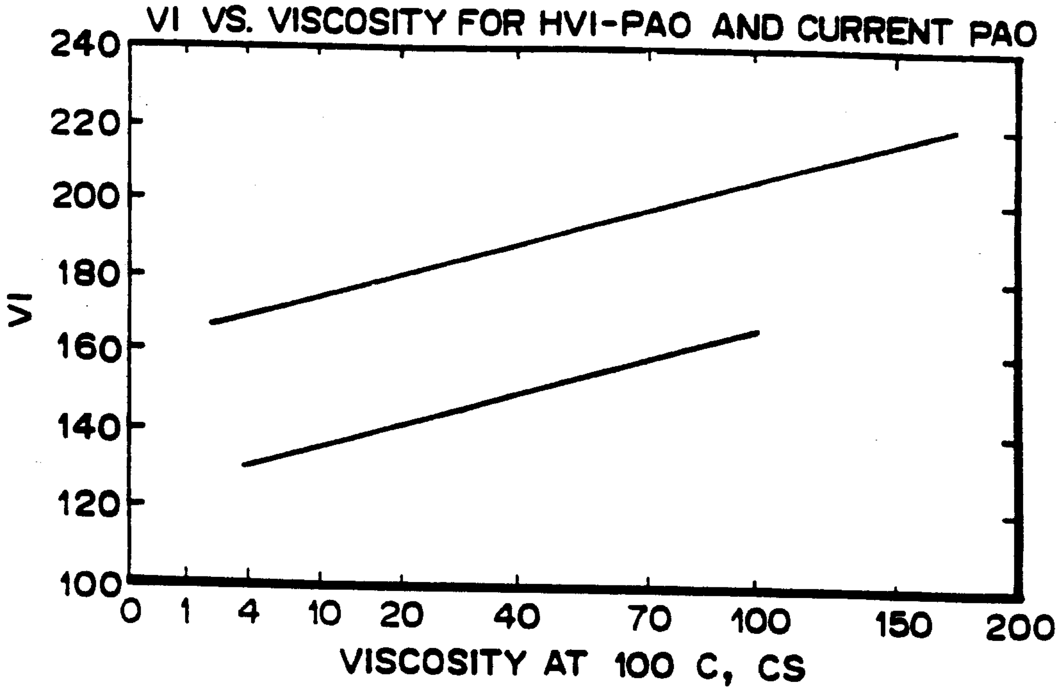
VI VS. VISCOSITY FOR HVI-PAO AND CURRENT PAO
240
220
200
180
160
140
120
100
VI
0
1
4
10
20
40
70
100
150
200
VISCOSITY AT 100 C, CS

FIG. 2

# FIG. 3

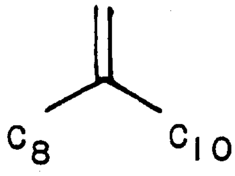

1

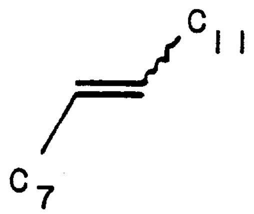

CIS-& TRANS-2

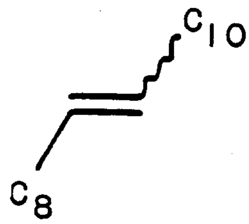

CIS-& TRANS- 3

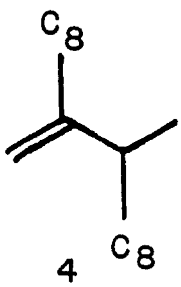

4

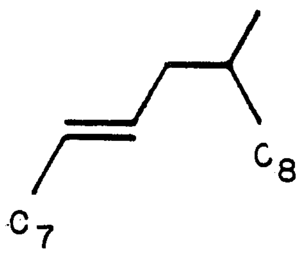

CIS-& TRANS- 5

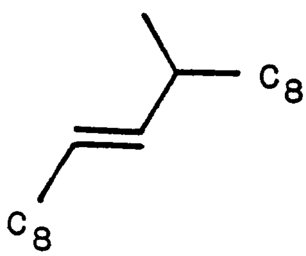

CIS-& TRANS- 6